# EUROPÄISCHE PATENTANMELDUNG

(11) **EP 2 333 179 A1**
(43) Veröffentlichungstag der Anmeldung: **15.06.2011**
(21) Anmeldenummer: 09014786.9
(22) Anmeldetag: 27.11.2009
(51) Int. Cl.: E04B 1/80, F16L 59/065

(54) **Vakuumisolationspaneel**

(71) Anmelder: Iso-Pan International GmbH, 23966 Wismar (DE)
(72) Erfinder: Wilke, Andreas, 22359 Hamburg (DE)
(74) Vertreter: Müller Verweyen

(57) **Zusammenfassung**

Ein Vakuumisolationspaneel (10) mit einer zwischen zwei Sperrschichten (11, 12) angeordneten evakuierten Schicht (13), wobei die evakuierte Schicht (13) eine aus formstabilen Hohlkammerwänden (16) bestehende Hohlkammerstruktur (15) mit einer Vielzahl von evakuierten Hohlkammern (17) umfasst, wobei die Hohlkammerwände (16) eine ausreichende mechanische Festigkeit und Gasdichtigkeit aufweisen, um in den einzelnen Hohlkammern (17) Vakuum gegen außen an der betrachteten Hohlkammer anliegenden Atmosphärendruck im Wesentlichen dauerhaft aufrechtzuhalten, und wobei die Sperrschichten (11, 12) von formstabilen Platten (13, 14) gebildet werden.

## Beschreibung

Die Erfindung betrifft ein Vakuumisolationspaneel nach dem Oberbegriff von Anspruch 1.

Derartige Vakuumisolationspaneele werden insbesondere zur Wärmeisolation im Baubereich sowie von Kühlgeräten, -behältern und -containern verwendet; Aufgrund der sehr geringen Wärmeleitfähigkeit kann vorteilhafterweise die Wandstärke gegenüber konventionellen Dämmstoffen erheblich reduziert werden.

Konventionelle Vakuumisolationspaneele weisen eine evakuierte Stützschicht aus einem porösen Dämmstoff und eine vakuumdichte Folienumhüllung auf. Dieser Aufbau bringt eine Reihe von Einschränkungen mit sich. Zunächst ist die Größe des Vakuumisolationspaneels festgelegt, was dazu führt, dass Vakuumisolationspaneele nur in wenigen Standardformaten ab Lager erhältlich sind. Individuelle Maße einer zu dämmenden Fläche können jedoch die Anfertigung von Sonderformaten zu erheblich höheren Kosten erfordern. Weiterhin muss in der Regel die zu dämmende Fläche vorab vermessen und ein Verlegeplan aufwendig erstellt werden. Zwischen den einzelnen Paneelen sind in der Regel Verbinder vorgesehen, die jedoch eine erheblich höhere Wärmeleitfähigkeit aufweisen und somit nachteilige Wärmebrücken bilden.

Des Weiteren wird bei einer Beschädigung der Folienumhüllung die Vakuumschicht belüftet, wodurch das Paneel seine vorteilhaften Dämmeigenschaften gegenüber herkömmlichen Dämmstoffen einbüßt. Die Handhabung von Vakuumisolationspaneelen erfordert daher ein hohes Maß an Sorgfalt, das jedoch beispielsweise unter Baustellenbedingungen in der Regel nicht gegeben ist. Zum Schutz der Paneele ist es bekannt, eine Ummantelung aus einem geschäumten Material, siehe WO 01 066864 A1, oder einem elastoviskosen Material, siehe DE 20 2007 014 564 U1, vorzusehen. Die Ummantelung führt jedoch zu einem erhöhten Herstellungsaufwand sowie höherem Gewicht und erhöhter Wandstärke.

Schließlich können Vakuumisolationspaneelen beispielsweise zur Befestigung an einer Wand oder zur Durchführung von Rohren oder Leitungen nicht einfach durchbohrt werden. Aus diesem Grund werden beispielsweise spezielle Verankerungselemente eingesetzt, siehe beispielsweise DE 100 39 141 A1, die wiederum Wärmebrücken bilden, oder die Paneele müssen durch zur Durchführung von Befestigungselementen, Leitungen oder Rohren aufwendig eingerichtet sein, siehe DE 20 2006 012 469 U1 und DE 20 2006 013 562 U1.

Aus der DE 199 04 799 A1 ist ein Verbund mehrerer Vakuumisolationspaneele zu einer großformatigen Dämmplatte mittels einer weiteren Umhüllung bekannt. Größe und gegebenenfalls Form der Dämmplatte soll variabel sein. Die Formate der Dämmplatte sind jedoch aufgrund der zur Verfügung stehenden Standardformate für die Vakuumisolationspaneele ebenfalls nur begrenzt. Des Weiteren ist das Format einer einmal hergestellten Dämmplatte festgelegt und kann beim Einbau nicht mehr an unterschiedliche Gegebenheiten angepasst werden.

Die Aufgabe der Erfindung besteht darin, ein robustes, in der Handhabung einfaches Vakuumisolationspaneel bereitzustellen, das einfach zu befestigen und gegebenenfalls noch beim Einbau in Form und Größe anpassbar ist.

Die Erfindung löst diese Aufgabe mit den Mitteln des unabhängigen Anspruchs 1. Der Kern der Erfindung ist die zwischen zwei formstabilen Platten angeordnete, Hohlkammern bildende Hohlkammerstruktur aus formstabilen Hohlkammerwänden, die eine ausreichende mechanische Festigkeit und Gasdichtigkeit aufweisen, um in den einzelnen Hohlkammern Vakuum gegen außen an der betrachteten Hohlkammer anliegenden Atmosphärendruck im Wesentlichen dauerhaft aufrechtzuhalten. Wenn daher eine einzelne Hohlkammer verletzt wird, wird das Vakuumisolationspaneel nicht vollständig belüftet, sondern die Belüftung und die damit einhergehende Beeinträchtigung der Wärmedämmung bleibt auf einen tolerierbar kleinen Bereich, nämlich eine einzelne Hohlkammer, beschränkt.

Diese Schadenstoleranz der erfindungsgemäßen Vakuumisolationspaneele bringt erhebliche Vorteile mit sich. Bei einer punktuellen Verletzung eines Paneels beispielsweise auf einer Baustelle wird nicht das gesamte Paneel unbrauchbar wie bei herkömmlichen Vakuumisolationspaneelen, sondern kann ohne wesentliche Einbuße verbaut werden. Die Paneele können mit gängigen Befestigungsmitteln, beispielsweise geeigneten Schrauben oder Nägeln, durchbohrt werden, wobei die Beeinträchtigung der Dämmwirkung aufgrund der Verletzung lediglich einer Hohlkammer im Wesentlichen vernachlässigbar ist. Spezielle Verankerungs- oder Verbindungselemente für die selbstformstabilen Paneele sind dann entbehrlich. Die Paneele können weiterhin auch nach ihrer Herstellung, beispielsweise auf dem Bau, in Form und Größe beliebig zugeschnitten werden, da die Belüftung und damit Beeinträchtigung der Dämmwirkung auf die Schnittkantenbereiche beschränkt bleibt, die klein gegen die flächige Ausdehnung der Paneele sind.

Bevorzugten Anwendungen der Erfindung betreffen Wärmeisolation im Baubereich, insbesondere Innendämmung von Wänden, Decken, Fußboden, Fassadendämmung, Außenwände, Dächer, Leichtbaukonstruktion, Kühlgeräte einschließlich Haushaltbereich, Kühlbehälter, beispielsweise Pharmatransportboxen, Kühlcontainer. Denkbar sind beispielsweise auch Anwendungen für die Isolierung von Schiffen, insbesondere Flüssiggas-Tankschiffen, Flugzeugen und Eisenbahnwaggons, im Automobilbereich, für Swimming-Pools etc.

Die Hohlkammerstruktur kann auf unterschiedliche Weisen realisiert werden. In einer bevorzugten Ausführungsform wird die Hohlkammerstruktur zunächst als separates Teil produziert und dann mit den beiden formstabilen Platten in gasdichter Form verbunden. Die Hohlkammerstruktur kann vorzugsweise eine Mehrschichtstruktur mit mindestens einer formstabilen Schicht und der Barriereschicht sein. Die formstabile Schicht der Hohlkammerstruktur kann vorzugsweise eine Kunststoffschicht umfassen. Die Barriereschicht kann vorteilhafterweise von einer gasundurchlässigen Folie, insbesondere einer Kunststofffolie, einer metallischen Folie oder einer Verbundfolie, gebildet sein. Alternativ kann die Barriereschicht auch von einer insbesondere metallischen Bedampfung der Hohlkammerstruktur gebildet sein.

In einer alternativen bevorzugten Ausführungsform kann die Hohlkammerstruktur auch ganz oder teilweise einstückig mit einer oder beiden formstabilen Platten gebildet sein. Insbesondere bei Ausführung der formstabilen Platten aus Kunststoff kann beispielsweise eine Platte mit der Hohlkammerstruktur als einheitliches Bauteil gefertigt, beispielsweise gegossen, werden.

Um eine ausreichende Stabilität der Hohlkammerstruktur gegen Kollabieren sicherzustellen, können die Hohlkammern vorzugsweise mit einem porösen Stützmaterial, insbesondere einem Silika-Gel-Material, gefüllt sein.

Die Erfindung wird im Folgenden anhand vorteilhafter Ausführungsformen unter Bezugnahme auf die beigefügten Figuren erläutert. Dabei zeigt:
- Fig. 1:: ein Vakuumisolationspaneel in einer seitlichen Ansicht;
- Fig. 2:: ein Vakuumisolationspaneel in einer Querschnittsansicht von oben; und
- Fig. 3:: eine schematische Darstellung einer Vorrichtung zur Herstellung eines Vakuumisolationspaneels.

Das als Sandwich-Platte aufgebaute Vakuumisolationspaneel 10 umfasst zwei Sperrschichten 11, 12 und eine zwischen den Sperrschichten 11, 12 angeordnete evakuierte Schicht 23. Die Sperrschichten 11, 12 werden von formstabilen Platten 13, 14 gebildet. Die evakuierte Schicht 23 umfasst eine Hohlkammern 17 bildende Hohlkammerstruktur 15, die eine aus einer Vielzahl gasdicht miteinander verbundener Hohlkammerwände 16 gebildete einheitliche Gerüststruktur ist.

Die Hohlkammerwände 16 bilden eine Vielzahl von Hohlkammern 17. Die Hohlkammern 17 sind zweckmäßigerweise röhrenförmig und verlaufen quer zur flächigen Erstreckung des Paneels 10 durchgehend von einer Platte 13 zu der anderen Platte 14, um eine effiziente Evakuierung der Hohlkammern 17 zu ermöglichen. Durch dieses Merkmal sind die Hohlkammern 17 beispielsweise abgrenzbar gegenüber Poren geschäumten Materials. Die Hohlkammern 17 sind im vorliegenden Beispiel im Querschnitt wabenförmig, d.h. regelmäßig sechseckig, können jedoch auch andere Querschnittsformen aufweisen, beispielsweise rund, oval oder mehreckig sein. Die Hohlkammern 17 weisen vorzugsweise einen über ihre Länge im Wesentlichen konstanten Querschnitt auf, können jedoch auch über die Länge und/oder Breite variierende Querschnitte aufweisen.

Die Hohlkammerstruktur 15 ist mit den formstabilen Platten 13, 14 beidseitig gasdicht verbunden. Die somit vollständig gegeneinander und nach außen abgedichteten Hohlräume 17 sind auf ein Vakuum von höchstens 100 mbar, vorzugsweise höchstens 10 mbar, weiter vorzugsweise höchstens 1 mbar, noch weiter vorzugsweise höchstens 0.1 mbar evakuiert. Aufgrund der Vakuumschicht 23 wird ein gegenüber konventionellen, nicht evakuierten Dämmstoffen erheblich verbesserter Wärmedurchlasswiderstand erreicht. Die Wärmeleitfähigkeit liegt vorzugsweise im Wesentlichen dauerhaft unter 0,02 W/(m_{*}K). Die Hohlkammerwände 16 und die Platten 13, 14 bestehen im Hinblick auf geringe Wärmebrückenbildung zweckmäßigerweise aus einem Material möglichst geringer Wärmeleitfähigkeit.

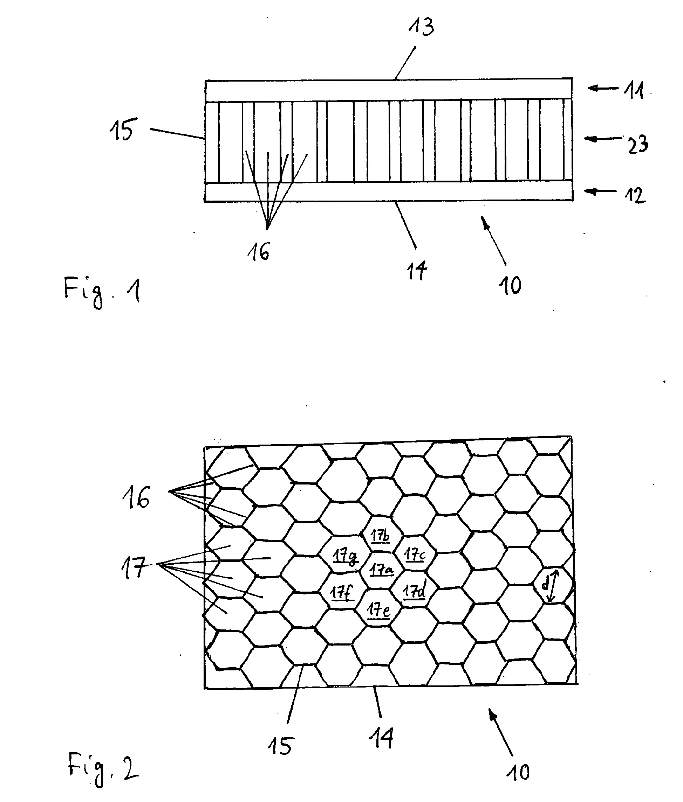

Der mittlere Querschnittsdurchmesser d der Hohlkammern 17 (siehe Fig. 2) ist vorzugsweise ausreichend groß, um eine schnelle Entlüftung der Hohlkammern 17 bei der Herstellung zu ermöglichen, und beträgt daher vorzugsweise mindestens 1 mm, vorzugsweise mindestens 2 mm. Andererseits beträgt der mittlere Querschnittsdurchmesser d der Hohlkammern 17 vorzugsweise höchstens 100 mm, vorzugsweise höchstens 50 mm, weiter vorzugsweise höchstens 20 mm, noch weiter vorzugsweise höchstens 10 mm, damit bei Belüftung einer Kammer die dadurch entstehende Beeinträchtigung der Dämmwirkung des Paneels 10 möglichst gering bleibt.

Die Gasdurchlässigkeit der Hohlkammerwände 16, der Platten 13, 14 und der Verbindungen der Hohlkammerwände 16 mit den Platten 13, 14 insbesondere für Luft bzw. Stickstoff, Sauerstoff und Wasserdampf ist verschwindend gering, so dass das in den geschlossenen Hohlkammern 17 vorliegende Vakuum, und damit eine gegenüber konventionellen, nicht evakuierten Dämmstoffen erheblich verringerte Wärmeleitfähigkeit von insbesondere unter 0,02 W/(m_{*}K) über Jahre, beispielsweise über einen Zeitraum von mindestens fünf Jahren, aufrechterhalten werden kann.

Die Hohlkammerwände 16 sind aus einem mechanisch ausreichend festen Material, um dauerhafte Formstabilität, und damit Funktionalität des Paneels 10, gegen außen gegen die betrachtete Hohlkammerwand 16 anliegenden Atmosphärendruck von ca. 1 bar aufrechtzuhalten. Gleiches gilt zweckmäßigerweise auch für die Platten 13, 14.

Aufgrund der individuellen Abdichtung jeder einzelnen Hohlkammer 17 und der Formstabilität der Hohlkammerstruktur 15 ist das Paneel 10 tolerant gegenüber der Verletzung einzelner Hohlkammern 17. Wenn beispielsweise die Hohlkammer 17a in Fig. 2 infolge Durchbohrung des Paneels 10 mit Befestigungsmitteln, oder durch Verletzung infolge unachtsamer Handhabung, belüftet wird, so werden das Vakuum und die Form der Hohlkammerstruktur in den benachbarten Hohlkammern 17b bis 17g infolge der mechanischen Festigkeit bzw. Formstabilität und der Gasdichtigkeit der Hohlkammerwände 16 dennoch dauerhaft aufrechterhalten. Die vorteilhaften Dämmeigenschaften des Paneels 10 werden dadurch kaum, nämlich lediglich im Verhältnis von Eins zur Gesamtanzahl sämtlicher Waben des Paneels 10, beeinträchtigt.

Aufgrund der individuellen Abdichtung jeder einzelnen Hohlkammer 17 und der Formstabilität der Hohlkammerstruktur 15 muss das Paneel 10 auch keine zusätzlichen Seitenwände oder seitlichen Abdeckungen aufweisen. Paneele 10 können daher in beliebiger Form und Größe in der Art von Endlosmaterial gefertigt werden und auch noch auf dem Bau in die gewünschte Größe und Form zugeschnitten werden, ohne im Wesentlichen ihre vorteilhaften Dämmeigenschaften zu verlieren.

Die vorzugsweise miteinander und den Platten 13, 14 verschweißbaren Hohlkammerwände 16 bestehen in einer Ausführungsform aus einem Mehrschichtsystem mit einer Trägerschicht und einer Gaspermeation durch die Hohlkammerwand verhindernden Barriereschicht. Die Trägerschicht kann vorzugsweise aus einem formstabilen polymeren Material, insbesondere einem Kunststoff oder Kunststoff-Verbundmaterial, bestehen. Die Barriereschicht kann aus einem geeigneten Polymer, Metall oder einem Verbundsystem bestehen und beispielsweise als Barrierefolie auf die Trägerschicht aufbracht sein. Als vorzugsweise schweißbare Barrierefolie eignet sich beispielsweise Stahlfolie, gegebenenfalls mehrschichtige Kunststofffolie mit polymerer oder metallischer Barriere, metallisierte Kunststofffolie, beispielsweise Aluminiumfolie oder Aluminiumverbundfolie. In einem Ausführungsbeispiel besteht die Barrierefolie aus einer Metallschicht, beispielsweise aus Aluminium, zwischen einer Trägerfolie aus Kunststoff, beispielsweise PET, und einer Schutzfolie aus Kunststoff, beispielsweise PE. In einer alternativen Ausführungsform kann eine insbesondere metallische Barriereschicht auf die Trägerschicht aufgedampft sein, beispielsweise durch Bedampfen mit Aluminium.

Alternativ können die Hohlkammerwände 16 auch aus einem einheitlichen Material, insbesondere einem Kunststoff, bestehen, das sowohl eine ausreichende Festigkeit bzw. Formbeständigkeit als auch eine ausreichende Sperrwirkung gegen Gaspermeation durch die Hohlkammerwände 16 aufweist.

Die vorzugsweise schweißbaren Platten 13, 14 bestehen vorzugsweise aus einem formstabilen Kunststoff. Aufgrund der formstabilen Platten 13, 14 ist das Paneel 10 selbsttragend. Falls erforderlich können die die Platten 13, 14 mit einer zuvor beschriebenen Barriereschicht versehen sein, beispielsweise durch Beschichtung mit einer geeigneten Barrierefolie.

Die Platten 13, 14 und die Hohlkammerstruktur 15 können jeweils vorgefertigt sein. Alternativ kann auch eine Platte mit der Hohlkammerstruktur 15, oder einem Teil derselben, einstückig gefertigt sein, beispielsweise in einem Spritzgießprozess oder einem Thermoformprozess oder einem Heißpressprozess mit einem geeigneten Kunststoff.

Die Hohlkammern 17 können zur Erhöhung der mechanischen Stabilität, insbesondere um ein Kollabieren der Hohlkammerstruktur 15 zu verhindern, mit einem Stützmaterial gefüllt sein, das zweckmäßigerweise eine möglichst geringe Wärmeleitfähigkeit aufweist. Als Stützmaterial kommen offenporige Schäume, Fasern oder Pulver in Frage. Günstige Materialien mit sehr niedrigem Wärmeleitungskoeffizient sind im Nanometerbereich strukturierte, hochverzweigte und poröse Silika-Gel-Materialien, insbesondere Areogele, pyrogene Kieselsäure oder gefällte Kieselsäure.

Das Vakuumisolationspaneel 10 hat insgesamt die Form einer vorzugsweise rechteckigen Platte, und ist vorzugsweise eine portable Einheit bzw. weist vorzugsweise eine Größe auf, die von einer Person handhabbar ist. Übliche Plattenmaße im Baubereich betragen beispielsweise 1 m x 1.5 m.

Zur Befestigung des Paneels 10 auf einem Untergrund, beispielsweise einer Wand, können nicht gezeigte Durchführungen, vorzugsweise in der Form von Hülsen, in dem Paneel 10 vorgesehen sein.

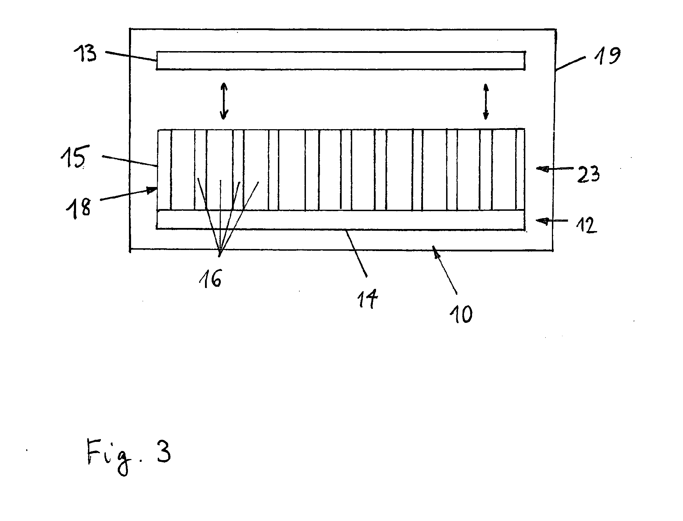

Im Folgenden wird die Herstellung des Vakuumisolationspaneels 10 anhand von Fig. 3 beschrieben. Zunächst wird in dieser Ausführungsform eine der Platten 13, 14, hier die Platte 14, mit der Hohlkammerstruktur 15 gasdicht verbunden; dies kann, insbesondere unter Atmosphäre, durch Schweißen, Kleben oder ein anderes geeignetes Verbindungsverfahren geschehen. Das resultierende Zwischenteil 18 und die andere Platte 13 werden in eine Vakuumkammer 19 gegeben. Zuvor werden gegebenenfalls die Hohlkammern 17 mit einem geeigneten Stützmaterial, beispielsweise pyrogener Kieselsäure, gefüllt.

Die Vakuumkammer 19 wird dann geschlossen und beispielsweise mit nicht gezeigten Vakuumpumpen unter das in den Hohlkammern 17 vorgesehene Vakuum evakuiert. Restgas wird aus den Hohlkammern 17 durch die offene Seite, in Figur 3 nach oben, abgesaugt. Nach einer Zeitdauer, die ausreicht, um in den Hohlkammern 17 das gewünschte Vakuum von höchstens 100 mbar, vorzugsweise höchstens 10 mbar, weiter vorzugsweise höchstens 1 mbar, noch weiter vorzugsweise höchstens 0.1 mbar, zu erzeugen, wird die andere Platte 13 mit dem Zwischenteil 18 mittels eines geeigneten Verfahrens gasdicht verbunden, beispielsweise mittels Vakuumschweißen, insbesondere im Durchschweißverfahren durch die Platte 13, oder Kleben. Nach der Belüftung der Vakuumkammer 19 kann das fertige Vakuumpaneel 10 entnommen werden.

## Patentansprüche

1. Vakuumisolationspaneel (10) mit einer zwischen zwei Sperrschichten (11, 12) angeordneten evakuierten Schicht (13), **dadurch gekennzeichnet, dass** die evakuierte Schicht (13) eine aus formstabilen Hohlkammerwänden (16) bestehende Hohlkammerstruktur (15) mit einer Vielzahl von evakuierten Hohlkammern (17) umfasst, wobei die Hohlkammerwände (16) eine ausreichende mechanische Festigkeit und Gasdichtigkeit aufweisen, um in den einzelnen Hohlkammern (17) Vakuum gegen außen an der betrachteten Hohlkammer anliegenden Atmosphärendruck im Wesentlichen dauerhaft aufrechtzuhalten, und wobei die Sperrschichten (11, 12) von formstabilen Platten (13, 14) gebildet werden.

2. Vakuumisolationspaneel nach Anspruch 1, wobei die Hohlkammerstruktur (15) aus einer Mehrschichtstruktur mit mindestens einer formstabilen Schicht und einer Barriereschicht besteht.

3. Vakuumisolationspaneel nach Anspruch 2, wobei die formstabile Schicht aus einem Polymermaterial besteht.

4. Vakuumisolationspaneel nach Anspruch 2 oder 3, wobei die Barriereschicht eine gasundurchlässige Folie umfasst.

5. Vakuumisolationspaneel nach einem der Ansprüche 2 bis 4, wobei die Barriereschicht von einer gasundurchlässigen Beschichtung der Hohlkammerwände gebildet wird.

6. Vakuumisolationspaneel nach einem der Ansprüche 2 bis 5, wobei die Barriereschicht eine Polymerschicht umfasst.

7. Vakuumisolationspaneel nach einem der Ansprüche 2 bis 6, wobei die Barriereschicht eine metallische Schicht umfasst.

8. Vakuumisolationspaneel nach einem der vorangehenden Ansprüche, wobei die Hohlkammerstruktur (15) ganz oder teilweise einstückig mit einer oder beiden formstabilen Platten (13, 14) gebildet ist.

9. Vakuumisolationspaneel nach einem der vorangehenden Ansprüche, wobei der mittlere Querschnittsdurchmesser d der Hohlkammern (17) höchstens 100 mm beträgt.

10. Vakuumisolationspaneel nach einem der vorangehenden Ansprüche, wobei der mittlere Querschnittsdurchmesser d der Hohlkammern (17) mindestens 1 mm beträgt.

11. Vakuumisolationspaneel nach einem der vorangehenden Ansprüche, wobei die Hohlkammern (17) mit einem Stützmaterial gefüllt sind.

12. Vakuumisolationspaneel nach Anspruch 11, wobei das Stützmaterial auf der Grundlage eines Silika-Gel-Materials gebildet ist.

13. Vakuumisolationspaneel nach einem der vorangehenden Ansprüche, wobei die formstabilen Platten (13, 14) aus Kunststoff bestehen.

14. Verfahren zur Herstellung eines Vakuumisolationspaneels (10) nach einem der vorangehenden Ansprüche, umfassend die Herstellung zweier Paneelhälften (13, 18) auf der Basis jeweils einer formstabilen Platte (13, 14), und gasdichtes Verbinden der beiden Paneelhälften (13, 18) unter Vakuum.

15. Verfahren nach Anspruch 14, umfassend das Füllen der Hohlkammerstruktur (15) mit einem stabilisierenden Füllmaterial vor dem gasdichten Verbinden der beiden Paneelhälften (13, 18).
